# FASCICULE DE BREVET EUROPEEN

(11) **EP 4 574 636 B1**
(45) Date de publication et mention de la délivrance du brevet: **13.05.2026**
(21) Numéro de dépôt: 24220339.6
(22) Date de dépôt: 16.12.2024
(51) Int. Cl.: B62H 5/00, E05B 67/06, E05B 71/00

(54) **DISPOSITIF ANTIVOL POUR VÉHICULE DE TYPE CYCLE, TEL QU'UNE BICYCLETTE, ET PROCÉDÉS ASSOCIÉS**
DIEBSTAHLSICHERUNGSVORRICHTUNG FÜR FAHRRAD, WIE FAHRRAD, UND ZUGEHÖRIGE VERFAHREN
ANTI-THEFT DEVICE FOR A CYCLE-TYPE VEHICLE, SUCH AS A BICYCLE, AND ASSOCIATED METHODS

(30) Priorité: 18.12.2023 FR 2314406
(43) Date de publication de la demande: 25.06.2025
(73) Titulaire: Etablissements Thirard, 80390 Fressenneville (FR)
(72) Inventeur: EMPEREUR, Yohann, 80130 BELLOY SUR MER (FR)
(74) Mandataire: Regimbeau

(56) Documents cités:
- US-A- 5 133 568
- US-A- 5 395 018
- US-A1- 2014 076 010
- US-A1- 2015 013 399

## Description

### DOMAINE TECHNIQUE

L'invention concerne les antivols, notamment de véhicule de type cycle, tel qu'une bicyclette.

### ETAT DE LA TECHNIQUE

Certains antivols de cycle, notamment de bicyclette, sont plébiscités pour leurs qualités de protection. C'est notamment le cas des antivols en forme d'étrier fermés par un boitier de verrouillage, par exemple les antivols en forme de « U ». Or, malgré qu'ils soient efficaces et pratiques à installer, un utilisateur du cycle peut être dissuadé de les utiliser en raison de leur encombrement. En effet, ces antivols sont entièrement rigides, il devient alors difficile, voire impossible, de les transporter sans prévoir de solution de rangement. L'utilisateur s'encombre alors d'une charge supplémentaire, par exemple en transportant l'antivol dans son sac, ou bien en l'attachant sommairement au cadre du cycle, l'antivol se balançant de part et d'autre du cadre par les forces inertielles en mouvement.

Une solution est proposée dans le document US-4 918 951 présentant un antivol de cycle, notamment de bicyclette, dans lequel l'antivol est agencé de sorte à réduire l'encombrement du boitier de verrouillage mais pas celui de l'étrier. L'antivol présente donc toujours une forme générale encombrante pour un transport sur une bicyclette.

Document US2015/013399A1 montre le préambule de la revendication 1.

### EXPOSE GENERAL

Un but du présent exposé est donc de pouvoir réduire encore davantage l'encombrement des antivols à structure rigide, notamment de l'étrier de l'antivol. De manière secondaire, un objectif du présent exposé est de pouvoir attacher rigidement l'antivol au véhicule.

À cet effet, selon un premier aspect du présent exposé, il est proposé un dispositif antivol pour véhicule à deux roues, tel qu'une bicyclette, le dispositif comprenant :
- un étrier comprenant :
   - deux barres longilignes s'étendant principalement selon deux axes coplanaires, ces deux barres formant des branches de l'étrier,
   - une base à partir de laquelle lesdites barres s'étendent,
- un boitier de verrouillage,

caractérisé en ce que au moins l'une des deux barres présente au moins un renflement et est montée sur la base d'étrier en étant apte à être tournée sur elle-même autour de l'axe selon lequel elle s'étend principalement,
ladite barre présentant au moins une zone de renflement et pouvant ainsi prendre au moins deux positions, l'une qui correspond à une configuration déployée de l'étrier, l'autre qui correspond à une configuration escamotée de celui-ci,
un espacement entre ladite zone de renflement de ladite barre et l'autre barre étant maximum en position déployée de l'étrier et étant minimum en position escamotée de l'étrier,
et en ce que les extrémités libres des barres sont configurées pour être mutuellement engagées dans le boitier et coopérer avec celui-ci de sorte à verrouiller ledit boitier sur l'étrier d'une part lorsque les barres sont dans leur position où l'étrier est en configuration escamotée et d'autre part lorsque les barres sont dans leur position où l'étrier est en configuration déployée.

Ainsi, grâce aux barres rotatives, l'utilisateur peut les rapprocher mutuellement pour rétracter l'étrier. L'antivol présente alors une silhouette moins encombrante. De plus, les barres peuvent être bougées de sorte à ajuster l'antivol à n'importe quel cadre. L'antivol est alors arrêté bilatéralement par le contact des barres sur le cadre. La liaison de l'antivol au cadre est donc rigidifiée.

Par escamoter, on entend dans la présente demande que l'antivol est capable de se replier latéralement. On dit également qu'il est capable de se rétracter. Par déployer, on entend ici au contraire que l'antivol est capable de se déplier latéralement. En d'autres termes, les barres de l'étrier sont aptes à se rapprocher ou à s'éloigner l'une de l'autre par rotation autour de leur axe. L'antivol n'est donc pas télescopique.

Il peut être prévu que la barre fait un quart de tour autour de l'axe selon lequel elle s'étend principalement pour passer de l'une des deux positions à l'autre des deux positions.

Il peut être prévu que la base et/ou les deux barres est/sont configurée(s) pour permettre un écartement angulaire des axes selon lesquels les deux barres s'étendent principalement lorsque le boitier n'est pas engagé sur les extrémités libres des barres.

Ainsi, il est possible de réduire de réduire davantage l'encombrement de l'antivol en diminuant l'espacement aux extrémités de l'antivol. En effet, l'étrier entoure rarement la bicyclette et un point de fixation sur toute sa longueur. Il est donc possible de réduire l'espacement des barres à ses extrémités. Les barres sont alors écartées lors de l'enfilement du point de fixation et de la bicyclette dans l'antivol puis rapprochées pour fermer l'antivol. L'étrier épouse alors localement la bicyclette et le point de fixation au lieu de le faire sur toute sa longueur.

Il peut être prévu en outre que la base de l'étrier comprend deux supports sur lesquels les deux barres sont respectivement montées, ces deux supports étant articulés pour former une charnière autorisant un écartement angulaire des axes selon lesquels les deux barres s'étendent par rotation autour d'un troisième axe perpendiculaire aux axes selon lesquels les deux barres s'étendent.

Ainsi, la base forme une charnière de l'étrier. La base de l'étrier peut également être articulée par d'autres moyens, notamment par une rotule ou un roulement.

Il peut être prévu que le boitier de verrouillage comprend des moyens de verrouillage à billes.

Les moyens de verrouillage à billes sont par ailleurs configurés pour maintenir l'étrier dans le boitier.

L'encombrement de l'antivol est alors encore davantage réduit en diminuant le volume du boitier de verrouillage. En effet, le système de verrouillage à billes est plus compact qu'un système à pêne et gâche classique. Alors, le boitier logeant le système de verrouillage est moins volumineux. Par ailleurs, les renflements des barres permettent également d'améliorer la compacité du système de verrouillage à billes en réduisant sa largeur, notamment en position déployée de l'étrier en comparaison avec un antivol en forme de « U ».

Il peut être prévu que chacune des deux barres comprend :
- un premier segment et un deuxième segment colinéaire au premier segment ;
- deux segments de liaison ; et
- un troisième segment qui définit un renflement entre les premier et deuxième segments, ledit troisième segment étant parallèle et distant de l'axe respectif de la barre,
ledit troisième segment étant relié de part et d'autre aux premier et deuxième segments par les deux segments de liaison de sorte à former le renflement.

Les barres peuvent donc être choisies pour adapter les dimensions de l'antivol selon son utilisation. En effet, l'antivol ne présentera pas les mêmes caractéristiques selon qu'il est utilisé pour une bicyclette ou une motocyclette. De même que les cycles peuvent être attachés à différentes catégories de points de fixation. Il est donc possible de concevoir un antivol « au plus juste » selon l'utilisation visée.

Il peut être prévu que les deux barres sont identiques.

Selon un deuxième aspect du présent exposé, il est proposé un dispositif de fixation d'un dispositif antivol à un véhicule à deux roues, tel qu'une bicyclette,
le dispositif antivol étant conforme au premier aspect,
le dispositif de fixation comprenant un premier support et un deuxième support configurés pour recevoir le dispositif antivol, notamment lorsque l'étrier est escamoté,
les premier et deuxième supports formant chacun un point de fixation du dispositif antivol à la bicyclette, la motocyclette ou analogue.

Ainsi, les deux supports ajoutent deux autres points d'arrêt de l'antivol. Il est donc davantage fixé sur le cadre.

Il peut être prévu que :
- le premier support est configuré pour recevoir le boitier de verrouillage, le premier support comprenant un premier organe de fixation à la bicyclette, la motocyclette ou analogue ; et
- le deuxième support, indépendant du premier support, est configuré pour recevoir l'étrier, le deuxième support comprenant un deuxième organe de fixation à la bicyclette, la motocyclette ou analogue.

Ainsi, le dispositif de fixation permet d'attacher et détacher rapidement et simplement le dispositif antivol.

Selon un troisième aspect du présent exposé, il est proposé un ensemble comprenant :
- un dispositif de fixation conforme au deuxième aspect ; et
- un dispositif antivol conforme au premier aspect,
le dispositif antivol étant relié fixement au support.

Selon un quatrième aspect du présent exposé, il est proposé un véhicule à deux roues, tel qu'une bicyclette,
le véhicule comprenant :
   - un cadre ; et
   - un ensemble selon le troisième aspect,
l'ensemble étant relié fixement au cadre par le dispositif de fixation.

Ainsi, le support de fixation, en synergie avec l'antivol, permet de fixer rigidement l'antivol au cadre du cycle. En effet, après avoir escamoté l'antivol pour déplacer son centre de masse au plus proche du cadre, l'antivol est logé bilatéralement dans les fourreaux. L'antivol est donc arrêté en quatre points, deux par son contact avec les supports et deux par son contact avec le cadre. Il ne peut donc plus bouger.

Selon un cinquième aspect du présent exposé, il est proposé un procédé de verrouillage d'un véhicule à deux roues, tel qu'une bicyclette, par un dispositif antivol conforme au premier aspect,
le procédant comprenant les étapes suivantes :
- déploiement de l'étrier depuis une position escamotée de l'étrier ;
- mise en place de l'étrier à la fois sur un élément d'attache fixe, tel qu'un poteau, et sur la bicyclette, motocyclette ou analogue ; et
- mise en place du boitier de verrouillage sur les extrémités libres des barres de l'étrier et verrouillage du dispositif antivol.

Selon un sixième aspect, il est proposé un procédé de déverrouillage d'un véhicule à deux roues, tel qu'une bicyclette, par un dispositif antivol conforme au premier aspect,
le procédant comprenant les étapes suivantes :
- déverrouillage et ouverture du dispositif antivol ;
- retrait de l'étrier dans lequel le véhicule et un point d'attache fixe, par exemple un poteau, sont enfilés ; et
- escamotage de l'étrier depuis une position déployée de l'étrier.

Bien entendu, le présente exposé concerne les véhicules à deux roues de type bicyclette mais il concerne également ceux de type motocyclette ou analogue.

Ainsi, dans ce qui suit, le présent exposé sera détaillé pour une bicyclette et s'applique *mutatis mutandis à* une motocyclette ou analogue.

### DESCRIPTION DES FIGURES

D'autres caractéristiques, buts et avantages ressortiront de la description qui suit, qui est purement illustrative et non limitative, et qui doit être lue en regard des dessins annexés sur lesquels :
la figure 1 et la figure 2 illustrent un dispositif antivol ;
la figure 3a et la figure 3b sont des vues rapprochées de l'antivol ;
la figure 4 illustre un dispositif antivol monté dans un support de fixation ;
la figure 5a et la figure 5b illustrent en détail des pièces d'un support de fixation ;
la figure 6a et la figure 6b illustrent respectivement un dispositif antivol monté sur un cycle et un support de fixation monté sur un cycle ; et
la figure 7 illustre un dispositif antivol monté sur un cycle ; et
la figure 8a et la figure 8b illustrent respectivement un mode de mise en œuvre d'un procédé de verrouillage d'un cycle et de déverrouillage d'un cycle.

### DESCRIPTION DETAILLEE

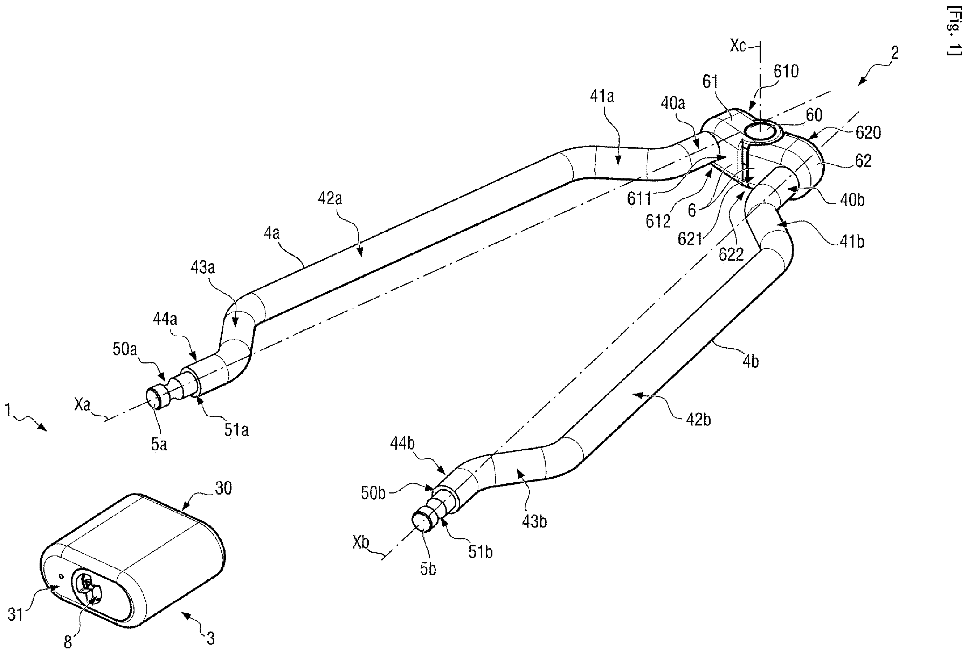

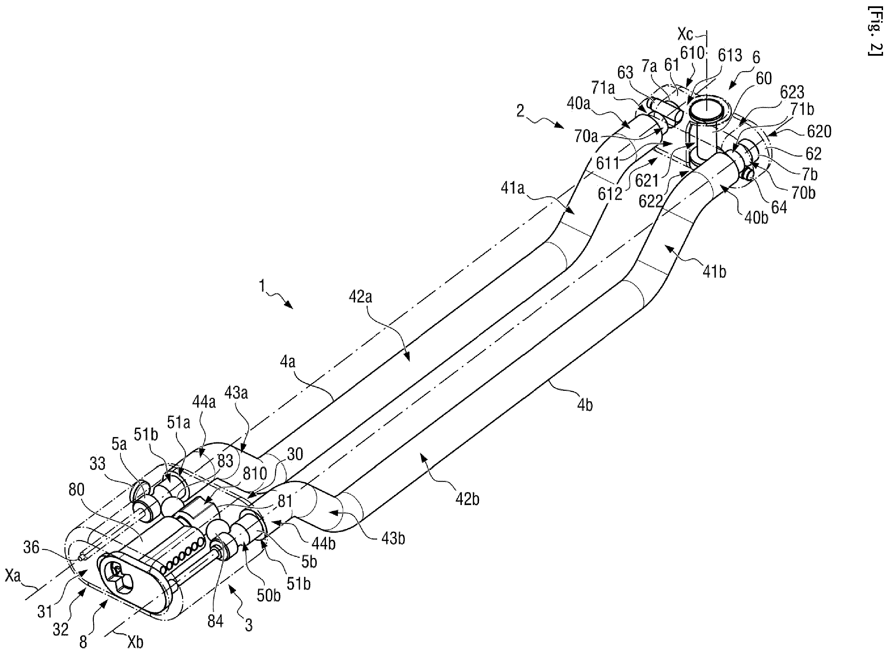

On a illustré aux figures 1 et 2 un exemple de dispositif antivol 1 comprenant un étrier 2 et un boitier de verrouillage 3. Sur la figure 1, le boitier de verrouillage 3 est séparé de l'étrier 2 qui est déployée afin d'enfiler une bicyclette 11 et un point de fixation, par exemple un poteau, dans l'étrier 2.

Sur la figure 2, le boitier de verrouillage 3 est relié fixement à l'étrier 2 qui est escamoté afin de pouvoir ranger l'antivol 1 sur la bicyclette 11.

L'étrier 2 comprend une première barre 4a et une deuxième barre 4b longilignes et une base 6 à partir de laquelle les barres 4a, 4b s'étendent principalement respectivement le long d'un premier axe Xa et d'un deuxième axe Xb.

Dans l'exemple illustré sur la figure 2, les barres 4a, 4b sont identiques. Elles présentent chacune un premier segment 40a, 40b et un deuxième segment 44a, 44b colinéaires entre eux et avec l'axe Xa, Xb. Les barres 4a, 4b comprennent en outre un troisième segment intermédiaire 42a, 42b parallèle et distant des deux autres segments 40a, 40b, 44a, 44b mais également de l'axe Xa, Xb. Les segments intermédiaires 42a, 42b sont reliés aux premiers 40a, 40b et deuxièmes 44a, 44b segments par des segments de liaison coudés 41a, 41b, 43a, 43b de sorte à former des renflements. Les barres 4a, 4b présentent alors une forme de cintre.

Bien entendu, d'autres formes de renflement peuvent être envisagés et les barres peuvent présenter d'autres formes asymétriques autour de leur axe Xa, Xb sans sortir du cadre du présent exposé.

Par exemple, les barres 4a, 4b peuvent présenter qu'un seul coude ou bien, au lieu de s'étendre le long d'une ligne brisée, elles peuvent s'étendre en arc.

En variante encore, seule l'une des barres 4a, 4b peut présenter un renflement tandis que l'autre est une barre droite. Également, une même barre 4a, 4b peut présenter plusieurs renflements dans sa longueur.

Les barres 4a, 4b sont rigides, c'est-à-dire qu'elles ne peuvent pas être déformées par un effort humain. Elles ne sont d'ailleurs pas configurées pour se déformer. Elles présentent en outre une résistance à la rupture élevée, notamment pour des raisons de sécurité. Ainsi, un matériau des barres 4a, 4b est par exemple un alliage d'acier adapté à un usage anti-effraction ou tout autre matériau présentant de telles caractéristiques. Les autres pièces du dispositif antivol 1 détaillées dans la suite du présent exposé étant aussi exposées aux effractions, elles présentent alors les mêmes caractéristiques en termes de rigidité, de déformation, de résistance à la rupture et de matériau.

La base 6 de l'étrier 2 peut être une charnière. En l'espèce, la charnière 6 comprend une broche 60 et deux supports 61, 62 montés mobiles en rotation sur le même pion 60. La première barre 4a est montée dans l'un des supports 61 et la deuxième 4b dans l'autre 62. Ainsi, la charnière 6 s'ouvre et se ferme par rotation des supports 61, 62 autour d'un même troisième axe Xc. L'étrier 2 peut alors être écarté ou rétracté en articulant les barres 4a, 4b autour du troisième axe Xc par l'intermédiaire de la charnière 6.

Chaque barre 4a, 4b est en outre mobile en rotation autour de son axe respectif Xa, Xb dans la charnière 6. Ainsi, l'étrier 2 peut être déployé ou escamoté en pivotant les barres, en l'espèce d'un quart de tour. Bien entendu, l'étrier 2 peut être déployé ou escamoté en pivotant les barres en moins d'un quart de tour ou en plus d'un quart de tour.

Dans cet exemple, les barres 4a, 4b sont libres en rotation, c'est-à-dire qu'elles tournent à 360° autour leur axe Xa, Xb. En variante, les barres peuvent être limitées en rotation, par exemple à l'aide de butées, typiquement à 180°, voire 90° ou moins.

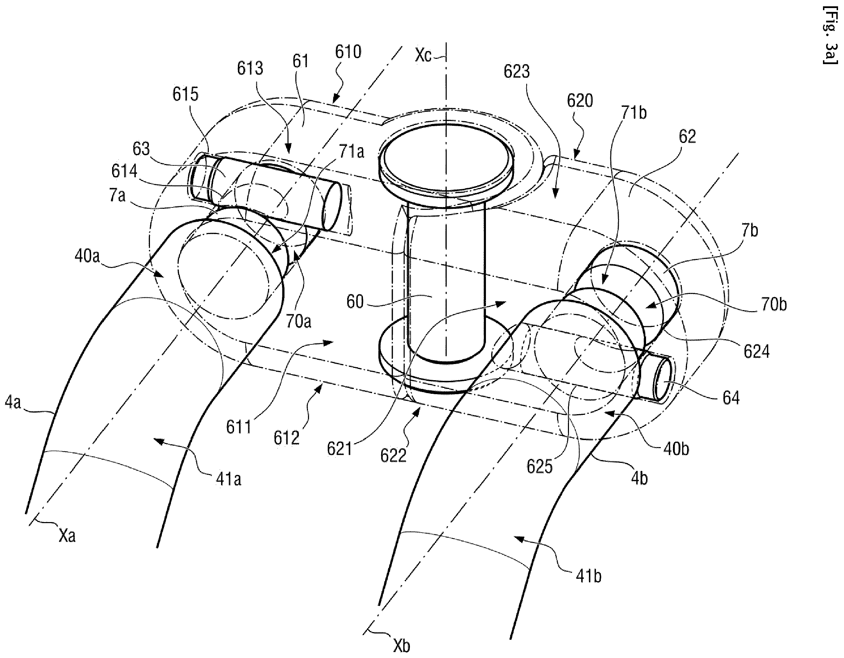

On a illustré en détail un exemple de charnière 6 en figure 3a. Dans cet exemple, Les supports 61, 62 sont des pièces creuses obtenues par exemple par moulage. Les supports 61, 62 présentent chacun un premier orifice 614, 624, s'étendant respectivement le long des premier et deuxième axes Xa, Xb. Les supports 61, 62 présentent en outre chacun un deuxième orifice 613, 623 s'étendant perpendiculairement à l'un des premier et deuxième axes et au troisième axe Xc. Le deuxième orifice 613, 623 entame le premier orifice 614, 624 de sorte à créer une ouverture au niveau de leur intersection.

Bien entendu, le deuxième orifice 613, 623 peut être incliné dans toutes les directions tant qu'il entame le deuxième orifice. Par exemple, au lieu de s'étendre orthogonalement au troisième axe Xc, il peut s'étendre parallèlement au troisième axe Xc.

Une première extrémité 7a, 7b des barres 4a, 4b est logée dans le premier orifice 614, 624 et est en appui sur le support 61, 62 par l'intermédiaire d'un épaulement 71a, 71b agencé sur la première extrémité 7a et en contact contre une face principale supérieure 611, 621 du support 61, 62.

Un pion 63, 64 logé dans le deuxième orifice 613, 623 traverse une gorge 70a, 70b agencée sur la première extrémité 7a et bloque en translation les barres 4a, 4b dans les premiers orifices 614, 624.

Les barres sont mises en position dans les supports 61, 62 par les premiers orifices 614, 624 et maintenues en position par les pions 63, 64 logés dans les gorges 70a, 70b. Ainsi, les barres 7a, 7b peuvent continuer à tourner sur leurs axes Xa, Xb tout en étant maintenues dans la charnière 6.

Bien entendu, les barres 7a, 7b de l'étrier 2 peuvent être mutuellement reliées différemment, par exemple, en tant que variante, les barres 7a, 7b peuvent être reliées directement par la broche 60.

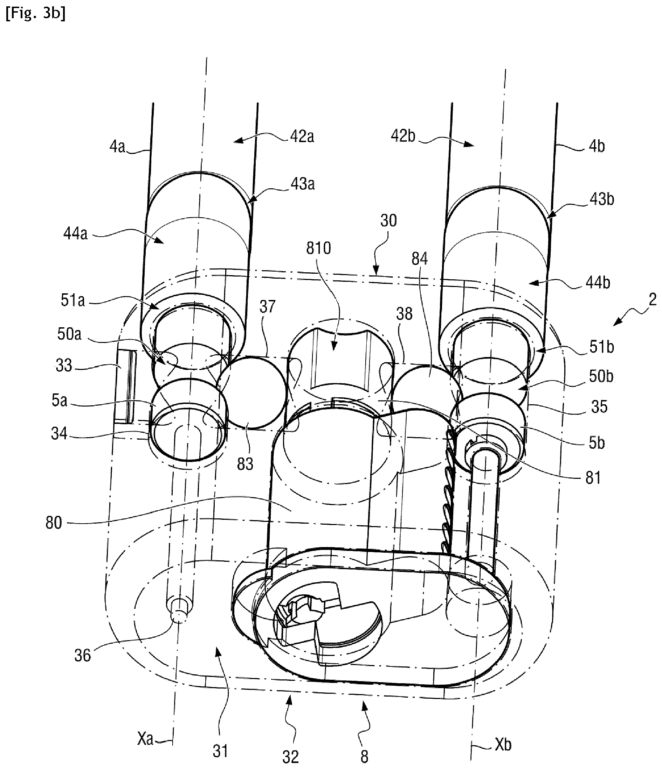

On a illustré en détail un exemple de boitier de verrouillage 3 en figure 3b. Dans cet exemple, le boitier 3 est une pièce creuse obtenue par exemple par moulage. Le boitier présente un corps 32 délimité par deux faces d'extrémité 30, 31. Le boitier 3 présente deux orifices 34, 35, s'étendant respectivement le long des premier et deuxième axes Xa, Xb. Le boitier 3 présente en outre un premier conduit 37 traversant le premier orifice 34 et un deuxième conduit 38, concentrique avec le premier conduit 37 et entamant le deuxième orifice 35 de sorte à former une ouverture sur une face latérale du deuxième orifice 35 à l'intersection avec le deuxième conduit 38.

Bien entendu, d'autres agencements des conduits sont possibles. Par exemple, les conduits 37, 38 peuvent s'étendre symétriquement dans deux plans obliques passant par les premier et deuxième axes Xa, Xb (en forme de « V ») ou bien dans un même plan orthogonal aux axes Xa, Xb.

Les conduits peuvent également présenter différentes formes, en cylindre, en goulotte, ou toute autre forme dans laquelle un contact bilatéral peut s'effectuer avec un objet pour le guider le long du conduit 37, 38.

Le boitier 3 comprend en outre des moyens de verrouillage 8 des barres 4a, 4b dans le boitier 3.

En l'espèce, les moyens de verrouillage 8 comprennent des billes 83, 84 logées dans les conduits et un barillet 80 présentant une came 81 à son extrémité. La came 81 est de forme générale cylindrique et présente un méplat 810 en circonférence de la came 81. Une pastille 33 bouche les conduits 37, 38 qui sont débouchant sur le boitier 3, notamment pour accéder aux billes 83, 84 lors de l'assemblage du boitier 3 ou bien pour la maintenance du boitier 3.

Pour assembler le boitier 3 à l'étrier 2, chaque barre 4a, 4b présente une deuxième extrémité 5a, 5b présentant un épaulement 51a, 51b. Ainsi, les deuxième extrémités 5a, 5b s'insèrent dans les orifices 34, 35 jusqu'à que les épaulement 51a, 51b soient en appui sur la première face d'extrémité 30 du boitier 3. De plus, les orifices 50, 51 sont espacées l'un de l'autre de sorte que les barres 4a, 4b insérées dans le boitier 3 soient parallèles entre elles.

Pour fixer le boitier 3 à l'étrier 2, chaque extrémité 5a, 5b présente en outre une gorge 50a, 50b. Ainsi, en actionnant les moyens de verrouillage 8, par exemple à l'aide d'une clé, les billes 83, 84 sont déplacés par l'intermédiaire de la came 81 jusqu'à être insérées dans les gorges 50a, 50b.

Les barres 4a, 4b sont alors mises en position dans le boitier 3 par les orifices 34, 35 du boitier 3 et maintenues en position par les billes 83, 84. Ainsi, les barres 7a, 7b parallèles entre elles peuvent continuer à tourner autour de leur axe Xa, Xb tout en étant maintenues dans le boitier 3.

Le boitier 3 comprend en outre un orifice 36 formé sur la deuxième face d'extrémité 31 du boitier 3. Afin de ne pas endommager les moyens de verrouillage 8, l'orifice 36 permet d'évacuer de l'eau qui pénètre dans le boitier 3. Il peut être prévu qu'un obturateur (non représenté sur les figures) soit monté pivotant dans l'orifice 36 afin de limiter, voire d'empêcher, des débris de s'insérer dans les moyens de verrouillage 8.

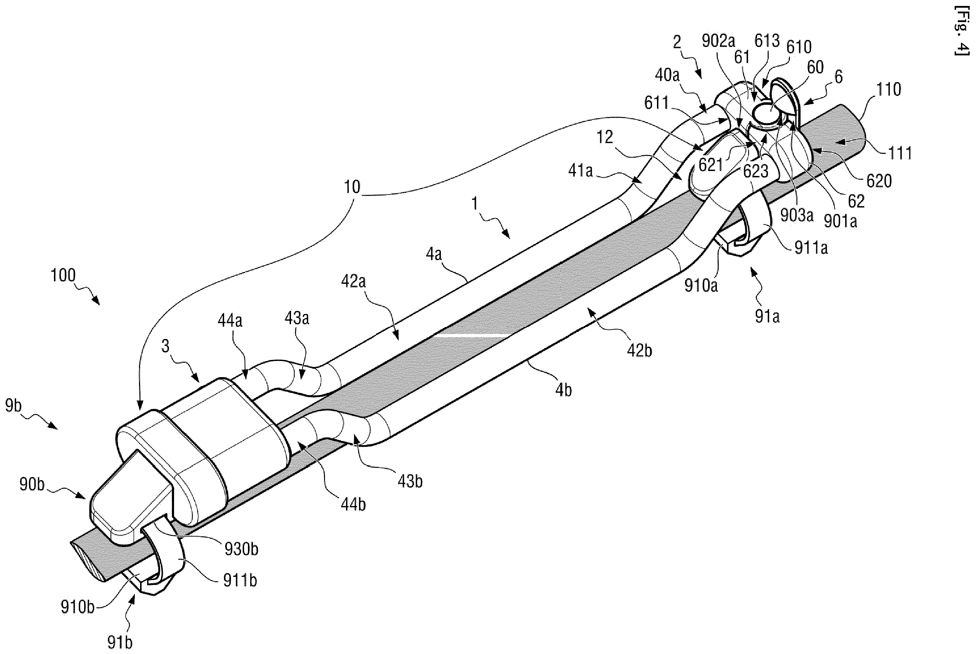

On a illustré en figure 4 un exemple de dispositif de fixation 10 du dispositif antivol 2. Le dispositif de fixation 10 et le dispositif antivol 2 monté sur le dispositif de fixation 10 forment un ensemble 100 relié au cadre 110 de la bicyclette 11. Le dispositif de fixation 10 comprend deux supports 9a, 9b reliés fixement à une tubulure 111 du cadre 110. Les supports 9a, 9b logent de part et d'autre l'antivol 1. Le premier support 9a reçoit le boitier 3 et le deuxième support 9b reçoit l'étrier 2. L'antivol 1 est alors contraint bilatéralement par les supports 9a, 9b et ne bouge plus.

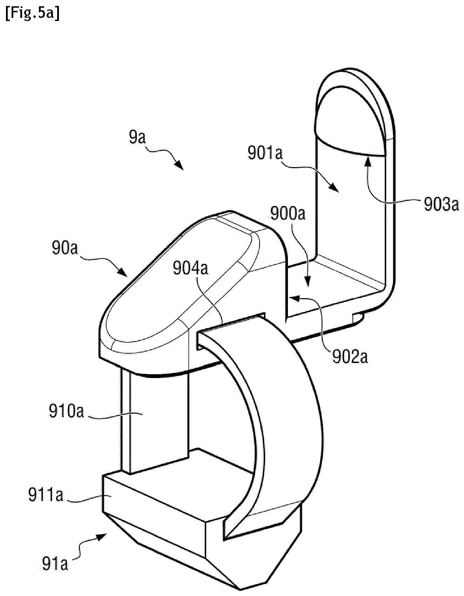

On a illustré en détail le premier support 9a en figure 5a. Dans cet exemple, le premier support 9a comprend un socle 90a apte à recevoir l'étrier 2. Le socle 90a comprend des parois 900a, 901a, 902a, 903a en contact avec des faces principales 611, 621, 610, 620 de la charnière 6 mais également avec des champs 612, 622, 613, 623 de la charnière 6. Les parois 900a, 901a, 902a, 903a empêchent alors une translation de l'antivol 1 dans toutes les directions de l'espace. Le socle 91a comprend en outre une fente 904a apte à recevoir un moyen flexible de serrage, par exemple un collier de serrage.

Le premier support 9a comprend en outre un organe de fixation 91a, en l'espèce un collier de serrage, comprenant un brin 910a et un cliquet 911a dans lequel le brin 910a s'insère pour serrer et bloquer le premier support 9a sur la tubulure 111 du cadre 110. Ainsi, il est possible de serrer rapidement le premier support 9a sur le cadre 110 en tirant sur le brin 910a.

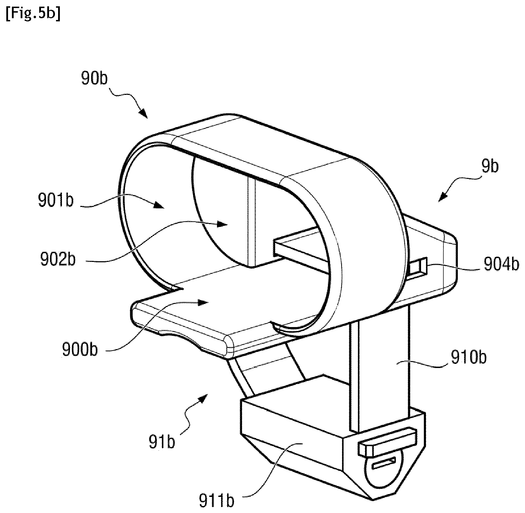

On a illustré en détail le deuxième support 9b en figure 5b. Dans cet exemple, le deuxième support 9b comprend un fourreau 90b apte à recevoir le boitier 3. Le fourreau 90b comprend des parois de guidage 900b, 901b sur lesquelles glisse le corps 32 du bloc et un fond 902b sur lequel vient en butée la deuxième face 32 du boitier 3.

De façon analogue au premier support 9a, le deuxième support 9b comprend en outre un organe de fixation 91b, en l'espèce un collier de serrage, comprenant un brin 910b et un cliquet 911b dans lequel le brin 910b s'insère pour serrer et bloquer le deuxième support 9b sur la tubulure 111 du cadre 110. Ainsi, il est possible de serrer rapidement le deuxième support 9b sur le cadre 110 en tirant sur le brin 910b.

Bien entendu, d'autres types de colliers de serrage peuvent être utilisés sans sortir du cadre du présent exposé. En variante, les moyens de serrage peuvent présenter deux coques, l'une monolithique avec le socle 90a, 90b et l'autre étant montée sur la première lorsqu'on fixe les premier 9a et deuxième 9b supports sur la tubulure 111 du cadre 110.

Par conséquent, le dispositif de fixation 10 peut être monté rapidement sur le cadre 110 à l'aide des moyens de serrage 91a, 91b des supports 9a, 9b.

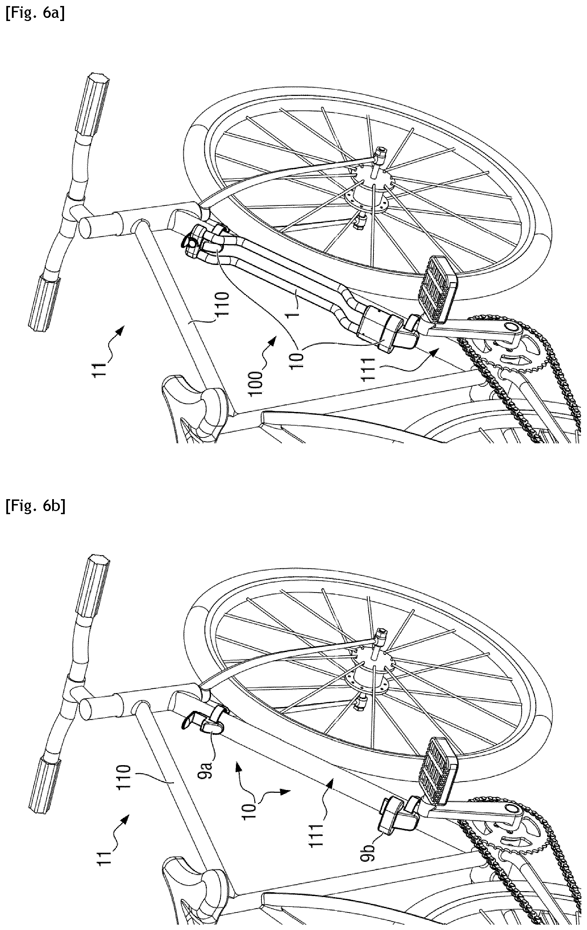

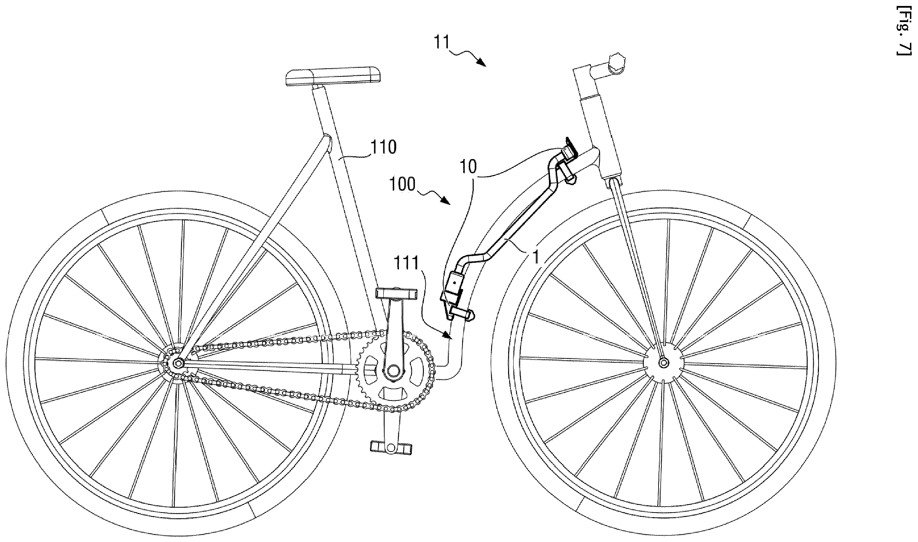

On a illustré un premier exemple de bicyclette 11 transportant l'ensemble 100 comprenant le dispositif de fixation 10 et le dispositif antivol 1 aux figures 6a et 6b et un second exemple de bicyclette en figure 7. Comme illustré sur ces figures, l'antivol 1 peut être monté sur différentes configurations de cadre.

Sur les figures 6a et 6b, l'antivol 1 est monté sur une tubulure 111 droite. Sur la figure 7, l'antivol 1 est monté sur une tubulure en arc. Ainsi, l'antivol 1 est adapté pour être transporté sur la plupart des cadres.

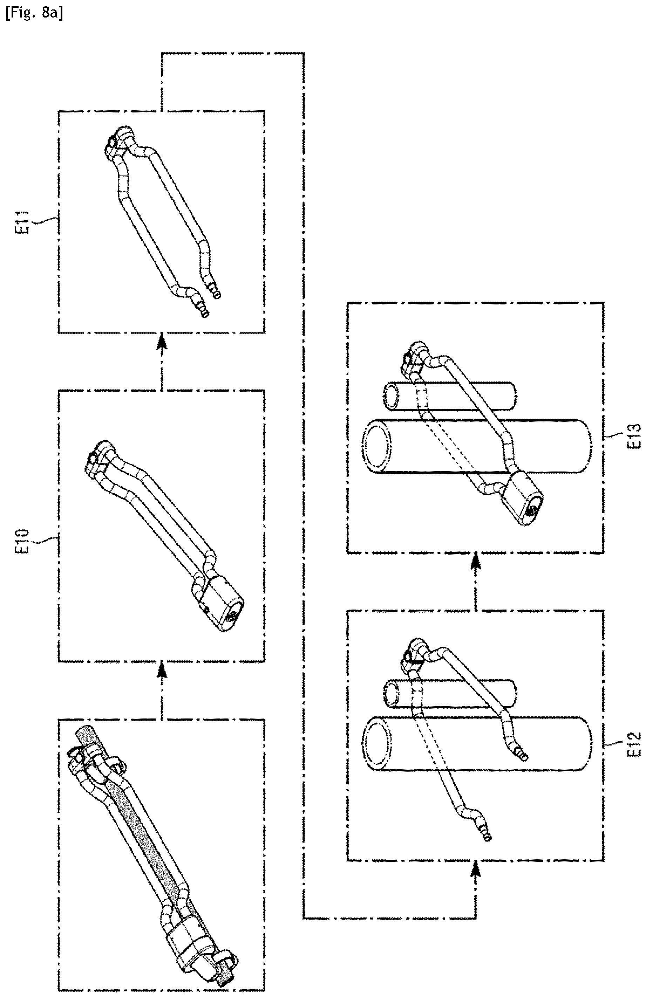

Un mode de mise en œuvre d'un procédé de verrouillage d'une bicyclette 11 sur le point de fixation est décrit en référence à la figure 8a.

Au cours d'une étape E10, l'antivol 1 est séparé du dispositif de fixation 10.

Au cours d'une étape E11, le boitier 3 est déverrouillé et séparé de l'étrier 2 et l'étrier 2 est déployé, par exemple en faisant tourner les barres 4a, 4b autour de leur axe Xa, Xb.

Au cours d'une étape E12, l'étrier 2 est mis en place à la fois sur un élément d'attache fixe, tel qu'un poteau, et sur la bicyclette 11, par exemple en écartant les barres 4a, 4b à l'aide de la charnière 6.

Au cours d'une étape E13, le boitier 3 de verrouillage est mis en place sur les extrémités libres 5a, 5b des barres 4a, 4b de l'étrier 2 après avoir rapproché les barres 4a, 4b à l'aide de la charnière 6 et le dispositif antivol 1 est verrouillé, par exemple à l'aide des moyens de verrouillage 8.

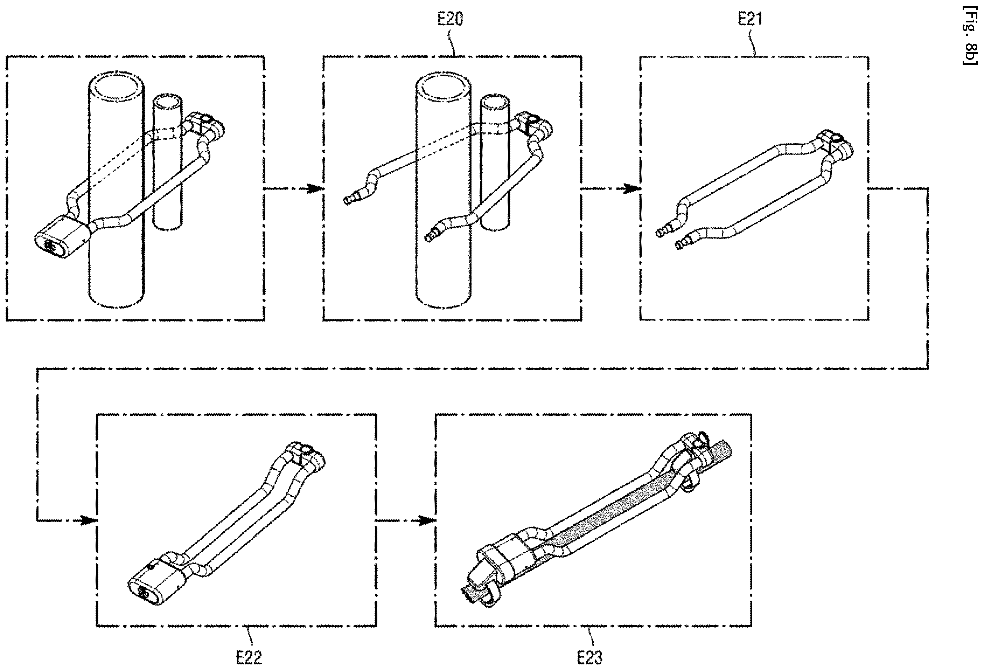

Un mode de mise en œuvre d'un procédé de déverrouillage d'une bicyclette 11 sur le point de fixation est décrit en référence à la figure 8b.

Au cours d'une étape E20, le dispositif 1 est ouvert et déverrouillé, par exemple en déverrouillant le boitier 3 et en le séparant de l'étrier 2.

Au cours d'une étape E21, l'étrier 2, dans lequel la bicyclette 11 et le point d'attache fixe sont enfilés, est retiré, par exemple en écartant les barres 4a, 4b à l'aide de la charnière 6.

Au cours d'une étape E22, l'étrier 2 est escamoté, par exemple en faisant tourner les barres 4a, 4b autour de leur axe Xa, Xb, puis le dispositif 1 est fermé, par exemple en rapprochant les barres 4a, 4b à l'aide de la charnière 6 puis en fixant le boitier 3 à l'étrier 2.

Au cours d'une étape E23, l'antivol 1 est monté sur le dispositif de fixation 10.

Le dispositif antivol 1 et le dispositif de fixation 10 décrits ci-dessus présentent donc de nombreux avantages.

Le dispositif antivol 1 est moins encombrant. Il peut alors être transporté plus facilement sur le cadre 110 de la bicyclette 11. Il peut être également transporté par n'importe quelle bicyclette 11. Enfin, il est attaché rigidement au cadre 11 et ne bouge donc plus pendant son transport.

## Revendications

1. Dispositif antivol (1) pour véhicule (11) à deux roues, tel qu'une bicyclette,
le dispositif (1) comprenant :
- un étrier (2) comprenant :
- deux barres (4a, 4b) longilignes s'étendant principalement selon deux axes coplanaires (Xa, Xb), ces deux barres formant des branches de l'étrier (2),
- une base (6) à partir de laquelle lesdites barres (4a, 4b) s'étendent,
- un boitier (3) de verrouillage,
où au moins l'une des deux barres (4a, 4b) présente au moins un renflement et est montée sur la base d'étrier (6) en étant apte à être tournée sur elle-même autour de l'axe (Xa, Xb) selon lequel elle s'étend principalement,
ladite barre (4a, 4b) présentant au moins une zone de renflement et pouvant ainsi prendre au moins deux positions, l'une qui correspond à une configuration déployée de l'étrier (2), l'autre qui correspond à une configuration escamotée de celui-ci,
un espacement entre ladite zone de renflement de ladite barre et l'autre barre étant maximum en position déployée de l'étrier (2) et étant minimum en position escamotée de l'étrier (2),
et où les extrémités libres des barres (5a, 5b) sont configurées pour être mutuellement engagées dans le boitier (3) , **caractérisé en ce que** les extrémités libres des barres sont configurées pour coopérer avec le boîtier (3) de sorte à verrouiller ledit boitier (3) sur l'étrier (2) d'une part lorsque les barres (4a, 4b) sont dans leur position où l'étrier (2) est en configuration escamotée et d'autre part lorsque les barres (4a, 4b) sont dans leur position où l'étrier (2) est en configuration déployée.

2. Dispositif antivol (1) selon la revendication 1, dans lequel la barre (4a, 4b) fait un quart de tour autour de l'axe (Xa, Xb) selon lequel elle s'étend principalement pour passer de l'une des deux positions à l'autre des deux positions.

3. Dispositif antivol (1) selon l'une des revendications 1 à 2, dans lequel la base (6) et/ou les deux barres (4a, 4b) est/sont configurée(s) pour permettre un écartement angulaire des axes (Xa, Xb) selon lesquels les deux barres (4a, 4b) s'étendent principalement lorsque le boitier (3) n'est pas engagé sur les extrémités libres des barres (5a, 5b).

4. Dispositif antivol (1) selon la revendication 3, dans lequel la base (6) de l'étrier (2) comprend deux supports (61, 62) sur lesquels les deux barres (4a, 4b) sont respectivement montées, ces deux supports (61, 62) étant articulés pour former une charnière (6) autorisant un écartement angulaire des axes (Xa, Xb) selon lesquels les deux barres s'étendent par rotation autour d'un troisième axe (Xc) perpendiculaire aux axes (Xa, Xb) selon lesquels les deux barres (4a, 4b) s'étendent.

5. Dispositif selon l'une des revendications 1 à 4, dans lequel le boiter de verrouillage (3) comprend des moyens de verrouillage (8) à billes.

6. Dispositif selon l'une des revendications 1 à 5, dans lequel chacune des deux barres comprend :
- un premier segment (40a, 40b) et un deuxième segment (44a, 44b) colinéaire au premier segment (40a, 40b) ;
- deux segments de liaison (41a, 41b, 43a, 43b) ; et
- un troisième segment (42a, 42b) qui définit un renflement entre les premier (40a, 40b) et deuxième segments (44a, 44b),
ledit troisième segment (42a, 42b) étant parallèle et distant de l'axe respectif (Xa, Xb) de la barre (4a, 4b),
ledit troisième segment (42a, 42b) étant relié de part et d'autre aux premier (40a, 40b) et deuxième (44a, 44b) segments par les deux segments de liaison (41a, 41b, 43a, 43b) de sorte à former le renflement.

7. Dispositif selon l'une des revendications 1 à 6, dans lequel les deux barres sont identiques.

8. Ensemble (100) comprenant :
- un dispositif antivol (1) conforme à l'une des revendications 1 à 7 ; et
- un dispositif de fixation (10) du dispositif antivol (1) à un véhicule à deux roues, tel qu'une bicyclette,
le dispositif de fixation (10) comprenant un premier support (9a) et un deuxième support (9b) configurés pour recevoir le dispositif antivol (1), notamment lorsque l'étrier (2) est escamoté,
les premier et deuxième supports (9a, 9b) formant chacun un point de fixation du dispositif antivol (1) à la bicyclette, la motocyclette ou analogue,
le dispositif antivol (1) étant relié fixement au dispositif de fixation (10).

9. Véhicule à deux roues, tel qu'une bicyclette,
le véhicule comprenant :
- un cadre (110) ; et
- un ensemble (100) selon la revendication 8,
l'ensemble (100) étant relié fixement au cadre (110) par le dispositif de fixation (91a, 91b).

10. Procédé de verrouillage d'un véhicule à deux roues, tel qu'une bicyclette, par un dispositif antivol (1) conforme à l'une des revendications 1 à 7,
le procédé comprenant les étapes suivantes :
- déploiement (E11) de l'étrier (2) depuis une position escamotée de l'étrier (2) ;
- mise en place (E12) de l'étrier (2) à la fois sur un élément d'attache fixe, tel qu'un poteau, et sur la bicyclette, motocyclette ou analogue ; et
- mise en place du boitier (3) de verrouillage sur les extrémités libres (5a, 5b) des barres (4a, 4b) de l'étrier (2) et verrouillage (E13) du dispositif antivol (1).

11. Procédé de déverrouillage d'un véhicule à deux roues, tel qu'une bicyclette, par un dispositif antivol (1) conforme à l'une des revendications 1 à 7,
le procédant comprenant les étapes suivantes :
- déverrouillage et ouverture (E20) du dispositif antivol (1) ;
- retrait (E21) de l'étrier (2) dans lequel le véhicule (11) et un point d'attache fixe, par exemple un poteau, sont enfilés ; et
- escamotage (E22) de l'étrier (2) depuis une position déployée de l'étrier (2).

## Patentansprüche

1. Diebstahlsicherung (1) für ein zweirädriges Fahrzeug (11), wie ein Fahrrad, wobei die Vorrichtung (1) umfasst:
- einen Bügel (2), umfassend:
- zwei längslinienförmige Stäbe (4a, 4b), die sich hauptsächlich entlang zweier koplanarer Achsen (Xa, Xb) erstrecken, wobei diese beiden Stäbe Schenkel des Bügels (2) bilden,
- eine Basis (6), von der aus sich die Stäbe (4a, 4b) erstrecken,
- ein Verriegelungsgehäuse (3), wobei
mindestens einer der beiden Stäbe (4a, 4b) mindestens eine Erhebung aufweist und an der Bügelbasis (6) so montiert ist, dass er um die Achse (Xa, Xb), entlang derer er sich hauptsächlich erstreckt, um sich selbst drehbar ist,
wobei der Stab (4a, 4b) mindestens einen Erhebungsbereich aufweist und somit mindestens zwei Positionen einnehmen kann, wobei die eine einer ausgefahrenen Konfiguration des Bügels (2) entspricht und die andere einer zurückgezogenen Konfiguration desselben entspricht,
wobei ein Abstand zwischen dem Erhebungsbereich des Stabs und des anderen Stabs in der ausgefahrenen Position des Bügels (2) maximal ist und in der zurückgezogenen Position des Bügels (2) minimal ist,
und wobei die freien Enden der Stäbe (5a, 5b) so eingerichtet sind, dass sie gegenseitig in das Gehäuse (3) eingreifen, **dadurch gekennzeichnet, dass** die freien Enden der Stäbe so eingerichtet sind, dass sie mit dem Gehäuse (3) zusammenarbeiten, um
einerseits das Gehäuse (3) am Bügel (2) zu verriegeln, wenn sich die Stäbe (4a, 4b) in ihrer Position befinden, in der sich der Bügel (2) in der zurückgezogenen Konfiguration befindet, und andererseits, wenn sich die Stäbe (4a, 4b) in ihrer Position befinden, in der sich der Bügel (2) in der ausgefahrenen Konfiguration befindet.

2. Diebstahlsicherungsvorrichtung (1) nach Anspruch 1, wobei der Stab (4a, 4b) eine Vierteldrehung um die Achse (Xa, Xb) macht, wobei er sich hauptsächlich erstreckt, um von einer der beiden Positionen in die andere der beiden Positionen zu wechseln.

3. Diebstahlsicherungsvorrichtung (1) nach einem der Ansprüche 1 bis 2, wobei die Basis (6) und/oder die beiden Stäbe (4a, 4b) so eingerichtet sind, dass sie einen Winkelabstand der Achsen (Xa, Xb) ermöglichen, entlang derer sich die beiden Stäbe (4a, 4b) hauptsächlich erstrecken, wenn das Gehäuse (3) nicht an den freien Enden der Stäbe (5a, 5b) eingerastet ist.

4. Diebstahlsicherungsvorrichtung (1) nach Anspruch 3, wobei die Basis (6) des Bügels (2) zwei Halterungen (61, 62) umfasst, an denen jeweils die beiden Stäbe (4a, 4b) montiert sind, wobei diese beiden Halterungen (61, 62) gelenkig montiert sind, um ein Scharnier (6) zu bilden, das einen Winkelabstand der Achsen (Xa, Xb), entlang derer sich die beiden Stäbe erstrecken, durch Drehung um eine dritte Achse (Xc) zulässt, die senkrecht zu den Achsen (Xa, Xb) verläuft, entlang derer sich die beiden Stäbe (4a), 4b) erstrecken.

5. Vorrichtung nach einem der Ansprüche 1 bis 4, wobei das Verriegelungsgehäuse (3) ein Kugelverriegelungsmittel (8) umfasst.

6. Vorrichtung nach einem der Ansprüche 1 bis 5, wobei jeder der beiden Stäbe umfasst:
- ein erstes Segment (40a, 40b) und ein zweites Segment (44a, 44b), das kollinear zum ersten Segment (40a, 40b) verläuft;
- zwei Verbindungssegmente (41a, 41b, 43a, 43b); und
- ein drittes Segment (42a, 42b), das eine Erhebung zwischen dem ersten Segment (40a, 40b) und dem zweiten Segment (44a, 44b) definiert,
wobei das dritte Segment (42a, 42b) parallel und von der jeweiligen Achse (Xa, Xb) des Stabs (4a, 4b) entfernt ist,
wobei das dritte Segment (42a, 42b) auf beiden Seiten mit dem ersten (40a, 40b) und dem zweiten (44a, 44b) Segment durch die beiden Verbindungssegmente (41a, 41b, 43a, 43b) verbunden ist, so dass die Erhebung gebildet wird.

7. Vorrichtung nach einem der Ansprüche 1 bis 6, wobei die beiden Stäbe identisch sind.

8. Baugruppe (100), umfassend:
- eine Diebstahlsicherungsvorrichtung (1) nach einem der Ansprüche 1 bis 7; und
- eine Vorrichtung zur Befestigung (10) der Diebstahlsicherung (1) an einem zweirädrigen Fahrzeug, wie einem Fahrrad,
wobei die Befestigungsvorrichtung (10) eine erste Halterung (9a) und eine zweite Halterung (9b) umfasst, die so eingerichtet sind, dass sie die Diebstahlsicherungsvorrichtung (1) aufnehmen, insbesondere wenn der Bügel (2) zurückgezogen ist,
wobei die erste und die zweite Halterung (9a, 9b) jeweils einen Befestigungspunkt der Diebstahlsicherungsvorrichtung (1) am Fahrrad, Motorrad oder Ähnlichem bilden,
wobei die Diebstahlsicherungsvorrichtung (1) fest mit der Befestigungsvorrichtung (10) verbunden ist.

9. Zweirädriges Fahrzeug, wie ein Fahrrad, wobei das Fahrzeug umfasst:
- einen Rahmen (110); und
- eine Baugruppe (100) nach Anspruch 8,
wobei die Baugruppe (100) durch die Befestigungsvorrichtung (91a, 91b) fest mit dem Rahmen (110) verbunden ist.

10. Verfahren zur Verriegelung eines zweirädrigen Fahrzeugs, wie eines Fahrrads, durch eine Diebstahlsicherungsvorrichtung (1) nach einem der Ansprüche 1 bis 7,
wobei das Verfahren die folgenden Schritte umfasst:
- Ausfahren (E11) des Bügels (2) aus einer zurückgezogenen Position des Bügels (2);
- Anbringen (E12) des Bügels (2) sowohl an einem festen Befestigungselement, wie einem Pfosten, als auch am Fahrrad, Motorrad oder Ähnlichem; und
- Anbringen des Verriegelungsgehäuses (3) an den freien Enden (5a, 5b) der Stäbe (4a, 4b) des Bügels (2) und Verriegeln (E13) der Diebstahlsicherungsvorrichtung (1).

11. Verfahren zum Entriegeln eines zweirädrigen Fahrzeugs, wie eines Fahrrads, durch eine Diebstahlsicherungsvorrichtung (1) nach einem der Ansprüche 1 bis 7,
wobei das Verfahren die folgenden Schritte umfasst:
- Entriegeln und Öffnen (E20) der Diebstahlsicherungsvorrichtung (1);
- Entfernen (E21) des Bügels (2), in den das Fahrzeug (11) und ein fester Befestigungspunkt, beispielsweise ein Pfosten, eingefädelt sind; und
- Zurückziehen (E22) des Bügels (2) aus einer ausgefahrenen Position des Bügels (2).

## Claims

1. Anti-theft device (1) for a two-wheeled vehicle (11), such as a bicycle,
the device (1) comprising:
- a bracket (2) comprising:
- two elongated bars (4a, 4b) extending mainly along two coplanar axes (Xa, Xb), these two bars forming branches of the bracket (2),
- a base (6) from which said bars (4a, 4b) extend,
- a locking housing (3),
where at least one of the two bars (4a, 4b) has at least one bulge and is mounted on the stirrup base (6) so that it can be rotated around the axis (Xa, Xb) along which it extends mainly,
said bar (4a, 4b) having at least one bulge zone and thus being able to assume at least two positions, one corresponding to an extended configuration of the stirrup (2), the other corresponding to a retracted configuration thereof,
the spacing between said bulge area of said bar and the other bar being maximum in the deployed position of the stirrup (2) and minimum in the retracted position of the stirrup (2), where the free ends of the bars (5a, 5b) are configured to be mutually engaged in the housing (3), **characterized in that** the free ends of the bars are configured to cooperate with the housing (3) so as to lock said housing (3) on the stirrup (2) on the one hand when the bars (4a, 4b) are in their position where the stirrup (2) is in the retracted configuration and, on the other hand, when the bars (4a, 4b) are in their position where the stirrup (2) is in the extended configuration.

2. Anti-theft device (1) according to claim 1, wherein the bar (4a, 4b) rotates a quarter turn about the axis (Xa, Xb) along which it extends mainly to move from one of the two positions to the other of the two positions.

3. Anti-theft device (1) according to one of claims 1 to 2, wherein the base (6) and/or the two bars (4a, 4b) are configured to allow angular separation of the axes (Xa, Xb) along which the two bars (4a, 4b) extend mainly when the housing (3) is not engaged on the free ends of the bars (5a, 5b).

4. Anti-theft device (1) according to claim 3, wherein the base (6) of the bracket (2) comprises two supports (61, 62) on which the two bars (4a, 4b) are respectively mounted, these two supports (61, 62) being articulated to form a hinge (6) allowing angular separation of the axes (Xa, Xb) along which the two bars extend by rotation around a third axis (Xc) perpendicular to the axes (Xa, Xb) along which the two bars (4a, 4b) extend.

5. Device according to one of claims 1 to 4, in which the locking box (3) comprises ball locking means (8).

6. Device according to one of claims 1 to 5, wherein each of the two bars comprises:
- a first segment (40a, 40b) and a second segment (44a, 44b) collinear with the first segment (40a, 40b);
- two connecting segments (41a, 41b, 43a, 43b); and
- a third segment (42a, 42b) which defines a bulge between the first (40a, 40b) and second segments (44a, 44b),
said third segment (42a, 42b) being parallel to and spaced from the respective axis (Xa, Xb) of the bar (4a, 4b),
said third segment (42a, 42b) being connected on both sides to the first (40a, 40b) and second (44a, 44b) segments by the two connecting segments (41a, 41b, 43a, 43b) so as to form the bulge.

7. Device according to one of claims 1 to 6, in which the two bars are identical.

8. Assembly (100) comprising:
- an anti-theft device (1) according to one of claims 1 to 7; and
- a device (10) for attaching the anti-theft device (1) to a two-wheeled vehicle, such as a bicycle,
the fastening device (10) comprising a first support (9a) and a second support (9b) configured to receive the anti-theft device (1), in particular when the bracket (2) is retracted,
the first and second supports (9a, 9b) each forming a point of attachment for the anti-theft device (1) to the bicycle, motorcycle, or similar vehicle,
the anti-theft device (1) being fixedly connected to the fastening device (10).

9. Two-wheeled vehicle, such as a bicycle,
the vehicle comprising:
- a frame (110); and
- an assembly (100) according to claim 8,
the assembly (100) being fixedly connected to the frame (110) by the fastening device (91a, 91b).

10. Method for locking a two-wheeled vehicle, such as a bicycle, using an anti-theft device (1) according to one of claims 1 to 7,
the method comprising the following steps:
- deploying (E11) the bracket (2) from a retracted position of the bracket (2);
- placing (E12) the bracket (2) both on a fixed attachment element, such as a post, and on the bicycle, motorcycle, or similar vehicle; and
- placing the locking housing (3) on the free ends (5a, 5b) of the bars (4a, 4b) of the bracket (2) and locking (E13) the anti-theft device (1).

11. Method for unlocking a two-wheeled vehicle, such as a bicycle, using an anti-theft device (1) in accordance with one of claims 1 to 7,
the method comprising the following steps:
- unlocking and opening (E20) the anti-theft device (1);
- removing (E21) the clamp (2) in which the vehicle (11) and a fixed attachment point, for example a post, are threaded; and
- retracting (E22) the shackle (2) from a deployed position of the shackle (2).
